# EUROPEAN PATENT APPLICATION

(11) **EP 1 253 696 A1**
(43) Date of publication of application: **30.10.2002**
(21) Application number: 01610044.8
(22) Date of filing: 25.04.2001
(51) Int. Cl.: H02J 7/00

(54) **A method of charging a battery**

(71) Applicant: TELEFONAKTIEBOLAGET L M ERICSSON (publ), 126 25 Stockholm (SE)
(72) Inventor: Kalogeropoulos, Sarandis, 211 54 Malmö (SE)
(74) Representative: Boesen, Johnny Peder

(57) **Abstract**

A method of supplying power to an electronic device (3; 31; 43; 53) having a power consumption in which predictable current peaks occur is disclosed. The device is connectable to a battery (2). The method comprises the steps of supplying power from a power supply (4; 33; 41; 52) to the device, providing a signal (22) from the device indicating that a current peak is about to occur, and connecting the battery to the device under control of said signal so that power is supplied from the battery to the device during the current peak. In this way it is possible to connect the battery just before the arrival of the peak, and thus an unnecessary voltage drop is avoided. Thus the device can be supplied from a standard low price charger after the battery has been fully charged, while predictable current peaks can still be handled without considerable voltage drops.

## Description

### Technical Field of the Invention

The invention relates to a method of supplying power to an electronic device of a type having a power consumption in which predictable current peaks occur, said device further being connectable to a battery. The invention further relates to a method of charging a battery connected to an electronic device, an electronic device connectable to a battery and an external power supply, an apparatus for charging a battery connected to an electronic device, and a battery pack comprising a battery connectable to an external power supply and to an electronic device.

### Description of Related Art

Many portable electronic devices, such as laptop computers, video cameras and mobile telephones make use of batteries as a supply of electrical power, either as the main power supply or as a back-up supply. Most commonly rechargeable batteries are used for this purpose, and therefore the batteries have to be recharged periodically by connecting them to an external power supply, e.g. a charger. The batteries can either be removed from the device for recharging, or they can be left in the device during the recharging process. In the latter case the device may be switched on during the process such that the charger supplies power to the battery as well as to the device. For instance, this will be the case when the batteries are used as a back-up supply, as is common for e.g. laptop computers. Some battery types may be left connected to the charger even after they are fully charged, such that they will always have a full charge when they, or the device, are removed from the charger.

However, other battery types, including Lithium ion (Li-ion) and Lithium Solid State/Polymer (LISS), are very sensitive to overcharging, and therefore the charging process has to be stopped when the battery is fully charged. This means that the battery must be disconnected from the charger. US 5 691 622 discloses a charging circuit in which a cutoff switch, e.g. in the form of a MOSFET, is coupled in series with the battery to be charged. A control circuit monitors the battery voltage and opens the switch when a predetermined voltage level is reached.

As mentioned, a load, in the form of the device to which the battery is connected, is often connected to the battery and the charger during the charging process, such that the device can also be used while the battery is being recharged. In the situation where the battery is disconnected from the charger when the battery is fully charged, the device must typically continue to be powered also after this disconnection, and this can happen in two ways, i.e. the device can be powered either from the battery or from the charger.

US 6 194 874 describes as prior art a charging system in which a switch in the device disconnects the charger from the device (including the battery) to terminate the charging process when the battery is fully charged, such that the device is then powered from the battery. Such a method has the drawback that the battery will then be discharged by the power consumption of the device so that it is no longer fully charged when it is later removed from the charger.

This drawback may be avoided when the battery is instead disconnected from the device so that the device is then powered from the charger. Such a circuit is disclosed in US 5 150 032 which shows a combined charging and supply circuit having an electronic switch in the form of a FET coupled in series with the battery. If this FET is turned off, the battery is disconnected. Disconnecting the battery ensures that the battery remains fully charged until the device with the battery is removed from the charger.

However, it is then required that the charger is capable of supplying sufficient power to the device even during current peaks. Such peaks may exceed the average current considerably and may occur for most of these devices. However, they will normally occur under program control and thus be predictable. As an example, a current peak will occur when a mobile telephone is required to register and/or authenticate itself, e.g. by making a socalled location update. The requirement that the charger must be able to deliver such current peaks increases the cost and the complexity of the charger. Often a standard low price charger will have to be replaced by a more expensive charger having the ability to deliver the high current peaks.

One solution to these problems is suggested in the above-mentioned US 6 194 874 having the switch in series with the charger. Instead of disconnecting the charger completely when the battery is fully charged, it is allowed to apply a maintenance voltage to the battery. The maintenance voltage is selected to be slightly lower than the anticipated voltage level for the battery in case no load is allowed to discharge the battery. If the battery voltage does not drop below the applied maintenance voltage, charge cannot flow into the battery, and thus the charger appears to be disconnected from the battery. However, if the battery voltage drops below the applied maintenance voltage, current will flow into the battery, providing a maintenance charge to the battery. In this way the power to the device, including the current peaks, will be taken from the battery, and thus a standard low price charger will be sufficient. At the same time the battery is maintained at a charge level corresponding to the applied maintenance voltage. However, in this system the battery does not remain fully charged, but only charged to a level corresponding to the maintenance voltage, and further a more complex and costly control circuit is needed in order to control the maintenance charging process.

It is known from JP 11-220834 to have a battery as a back-up power supply for a generator in a car whose generating capacity is not sufficient to handle large inrush currents. When a detecting circuit detects that the supply voltage to the load has fallen below an acceptable limit, power is fed from the battery in parallel with the output of the generator so that a relatively stable voltage can be achieved even during a momentary overload. However, since the battery in this system is only connected to the load when a voltage drop has already been detected, the system is not suitable for the devices considered here, because they are typically more sensitive to sudden voltage drops.

Therefore, it is an object of the invention to provide a method of the above-mentioned type in which the device can be supplied from a standard low price charger after the battery has been fully charged, while predictable current peaks can still be handled without considerable voltage drops. Further, complex control circuits like in the above-mentioned maintenance charging should be avoided.

### Summary

According to the invention the object is achieved in that the method further comprises the steps of supplying power from an external power supply to the device, providing a signal from the device indicating that a current peak is about to occur, and connecting the battery to the device under control of said signal so that power is supplied from the battery to the device during said current peak. When the battery is connected under control of the signal indicating that a current peak will occur, it is possible to connect the battery just before the arrival of the peak, and thus an unnecessary voltage drop is avoided. Since the current peaks normally occur in the device under program control, it is easy to provide a signal indicative of the expected occurrence.

When the method further comprises the steps of providing a signal from the device indicating that said current peak is concluded, and disconnecting the battery from the device under control of said signal indicating the conclusion of the current peak, so that power is again supplied from the external power supply to the device, it is ensured that the battery only supplies power during the current peak, and thus the discharge of the battery remains at a low level.

As mentioned, the invention also relates to a method of charging a battery connected to an electronic device of a type having a power consumption in which predictable current peaks occur, said method comprising the steps of charging the battery from a charger; simultaneously supplying power from the charger to the device; measuring the charge level of the battery during the charging process; detecting when the charge level of the battery assumes a predetermined charge level; and disconnecting the battery from the charger and the device when said predetermined charge level is detected.

When the method further comprises the steps of providing a signal from the device indicating that a current peak is about to occur, and connecting the battery to the device under control of said signal so that power is supplied from the battery to the device during said current peak, it is possible to connect the battery just before the arrival of the peak, and thus an unnecessary voltage drop is avoided. Since the current peaks normally occur in the device under program control, it is easy to provide a signal indicative of the expected occurrence. Thus the device can be supplied from a standard low price charger after the battery has been fully charged, while predictable current peaks can still be handled without considerable voltage drops. Further, complex control circuits like in the above-mentioned maintenance charging can be avoided.

When the method further comprises the steps of providing a signal from the device indicating that said current peak is concluded, and disconnecting the battery from the device under control of said signal indicating the conclusion of the current peak, so that power is again supplied from the external power supply to the device, it is ensured that the battery only supplies power during the current peak, and thus the discharge of the battery remains at a low level.

The method may further comprise the steps of measuring the voltage level of the battery, detecting when the voltage level of the battery has fallen to a predetermined voltage level, and recharging the battery from the charger until the charge level of the battery again assumes the predetermined charge level. This ensures that if the battery voltage decreases too much because of the discharge during the current peaks, it can be recharged, so that the battery will always be substantially fully charged when removed from the charger.

In an expedient embodiment of the invention the electronic device is a mobile telephone, and the current peak is caused by the telephone performing a location update procedure. Also in an expedient embodiment of the invention the battery is a Lithium ion battery.

As mentioned, the invention also relates to an electronic device connectable to a battery and an external power supply, said device being of a type having a power consumption in which predictable current peaks occur. When the device is arranged to provide a signal indicating that a current peak is about to occur, and the device comprises means for connecting the device to the battery under control of said signal so that power can be supplied from the battery to the device during said current peak, it will be possible to connect the battery just before the arrival of the peak, and thus an unnecessary voltage drop is avoided. Since the current peaks normally occur in the device under program control, it is easy to provide a signal indicative of the expected occurrence. Thus the device can be supplied from a standard low price charger after the battery has been fully charged, while predictable current peaks can still be handled without considerable voltage drops. Further, complex control circuits like in the above-mentioned maintenance charging can be avoided.

When the device is further arranged to provide a signal indicating that the current peak is concluded, and said means for connecting the device to the battery are further arranged to disconnect the battery from the device under control of said signal indicating the conclusion of the current peak, so that after the current peak power can be supplied from the external power supply to the device, it is ensured that the battery only needs to supply power during the current peak, and thus the discharge of the battery can remain at a low level.

The electronic device may comprise control means arranged to measure the voltage level of the battery, detect when the voltage level of the battery has fallen to a predetermined voltage level, and charge the battery from the external power supply until the charge level of the battery assumes a predetermined charge level. This ensures that if the battery voltage should decrease too much because of the discharge during the current peaks, it can be recharged, so that the battery will always be substantially fully charged when removed from the charger.

In expedient embodiments of the device the means for connecting the device to the battery may comprise a Field Effect Transistor, the electronic device may be a mobile telephone, and the mobile telephone may be arranged to perform a location update procedure.

As mentioned, the invention also relates to an apparatus for charging a battery connected to an electronic device of a type having a power consumption in which predictable current peaks occur. When the apparatus is arranged to receive a signal from the electronic device indicating that a current peak is about to occur, and the apparatus comprises means for connecting the device to the battery under control of said signal so that power can be supplied from the battery to the device during said current peak, it will be possible to connect the battery just before the arrival of the peak, and thus an unnecessary voltage drop is avoided. Since the current peaks normally occur in the device under program control, it is easy to provide a signal indicative of the expected occurrence. Thus the device can be supplied from a standard low price charging apparatus after the battery has been fully charged, while predictable current peaks can still be handled without considerable voltage drops. Further, complex control circuits like in the above-mentioned maintenance charging can be avoided.

When the apparatus is further arranged to receive a signal from the electronic device indicating that said current peak is concluded, and said means for connecting the device to the battery are further arranged to disconnect the battery from the device under control of said signal indicating the conclusion of the current peak, so that after the current peak power can be supplied from the apparatus to the device, it is ensured that the battery only needs to supply power during the current peak, and thus the discharge of the battery can remain at a low level.

The apparatus may comprise control means arranged to measure the voltage level of the battery, detect when the voltage level of the battery has fallen to a predetermined voltage level, and charge the battery until the charge level of the battery assumes a predetermined charge level. This ensures that if the battery voltage should decrease too much because of the discharge during the current peaks, it can be recharged, so that the battery will always be substantially fully charged when removed from the charging apparatus.

In an expedient embodiment of the apparatus the means for connecting the device to the battery may comprise a Field Effect Transistor.

As mentioned, the invention also relates to a battery pack comprising a battery connectable to an external power supply and to an electronic device of a type having a power consumption in which predictable current peaks occur. When the battery pack is arranged to receive a signal from the electronic device indicating that a current peak is about to occur, and the battery pack comprises means for connecting the device to the battery under control of said signal so that power can be supplied from the battery to the device during said current peak, it will be possible to connect the battery just before the arrival of the peak, and thus an unnecessary voltage drop is avoided. Since the current peaks normally occur in the device under program control, it is easy to provide a signal indicative of the expected occurrence. Thus the device can be supplied from a standard low price charger after the battery has been fully charged, while predictable current peaks can still be handled without considerable voltage drops. Further, complex control circuits like in the above-mentioned maintenance charging can be avoided.

When the battery pack is further arranged to receive a signal from the electronic device indicating that said current peak is concluded, and said means for connecting the device to the battery are further arranged to disconnect the battery from the device under control of said signal indicating the conclusion of the current peak, so that after the current peak power can be supplied from the external power supply to the device, it is ensured that the battery only needs to supply power during the current peak, and thus the discharge of the battery can remain at a low level.

The battery pack may comprise control means arranged to measure the voltage level of the battery, detect when the voltage level of the battery has fallen to a predetermined voltage level, and charge the battery from the external power supply until the charge level of the battery assumes a predetermined charge level. This ensures that if the battery voltage should decrease too much because of the discharge during the current peaks, it can be recharged, so that the battery will always be substantially fully charged when removed from the charger.

In expedient embodiments of the battery pack the means for connecting the device to the battery may comprise a Field Effect Transistor, and the battery may be a Lithium ion battery.

### Brief Description of the Drawings

The invention will now be described more fully below with reference to the drawings, in which
figure 1 shows a prior art circuit for charging a battery,
figure 2 shows another prior art charging circuit,
figure 3 shows a charging circuit modified according to the invention,
figure 4 shows a flowchart of a program modified according to the invention,
figure 5 shows an embodiment with a control circuit arranged in a mobile telephone,
figure 6 shows an embodiment with a control circuit arranged in a charger, and
figure 7 shows an embodiment with a control circuit arranged in a battery pack.

### Detailed Description of Embodiments

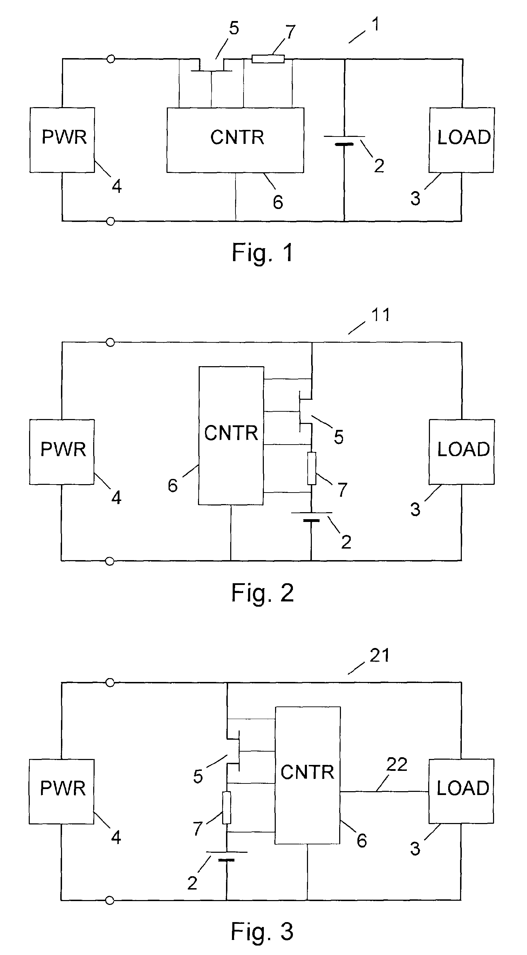

Figure 1 shows a prior art circuit 1 for charging a battery 2 connected to a load 3 in the form of a device which can be e.g. a laptop computer, a mobile telephone, a PDA (Personal Digital Assistant) or a video camera. Below a mobile telephone will be used as an example of the device 3. The battery 2 can be charged from an external power supply or charger 4. During the charging process current is supplied from the charger 4 and regulated by a FET (Field Effect Transistor) 5 controlled by the control circuit 6. During the charging process the FET 5 functions as a linear regulator, but as will be seen below, the FET can also have the function of a switch. A resistor 7 allows the control circuit 6 to detect the current flowing into the battery 2.

The battery 2 is assumed to be e.g. a Lithium ion (Li-ion) battery which is sensitive to overcharging. Batteries of this type are usually charged by a two-phase charging process in which the battery is first charged with a constant current and then with a constant voltage. In the first phase the control circuit 6 regulates the FET 5 to apply a constant current to the battery 2 until the battery voltage reaches a predetermined threshold. The control circuit 6 then regulates the FET 5 to apply a constant voltage to the battery until the current through the resistor 7 has fallen below a predetermined current threshold after which the battery may be considered fully charged. The FET 5 is then switched off so that the charger is disconnected from the battery in order to protect the battery from overcharging.

During the charging process the mobile telephone 3 will often be in an on-state, so that the charger supplies current to the phone as well as charging current to the battery 2. When the battery is fully charged and the charger disconnected, the supply current to the mobile telephone is now taken from the battery 2. The user of the mobile telephone is normally not aware of the exact point in time on which the battery is fully charged, and therefore he tends to leave the phone in the charger for an extended period of time, e.g. over the night. None the less, he expects the battery to be fully charged when the phone, including the battery, is physically removed from the charger. However, as explained above this will not be the case with this charging circuit, since at that time the battery may have supplied power to the phone for several hours so that it is already partially discharged.

In the circuit of figure 1 the FET 5 is used as a linear regulator during the charging process as well as a switch to disconnect the charger when the battery is fully charged. Alternatively, these functions could also be performed by two separate FETs, so that one FET is a linear regulator, while another is used to disconnect the charger. Other types of switches and regulators may also be used.

An alternative prior art charging circuit is shown in figure 2. The components are the same as in figure 1, but the load, i.e. the mobile telephone 3, is connected to the other side of the FET 5. The charging process is similar to the one described above, except that the current to the load is now supplied from the charger directly to the load, not through the FET 5. However, when the battery is fully charged, it is now the battery 2 that is disconnected. This means that after this point of time the supply current to the load is delivered from the charger 4, and the battery 2 remains fully charged.

Most of the time the supply current to the mobile telephone is limited to a relatively low level. Actually, the phone will normally be in stand-by mode when it is placed in the charger. However, occasionally it will make a socalled Location Update during which it will transmit at full output power for a short time. This requires a supply current considerably higher than the average current delivered from the charger. Of course the charger can be designed to deliver this higher current, but this will increase the complexity and the cost of the charger considerably, and most people prefer to use a standard low price charger for their mobile telephone.

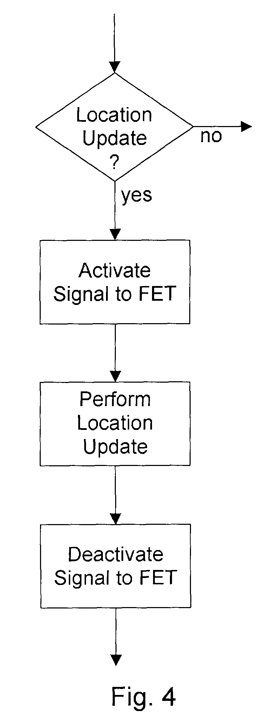

In figure 3 the circuit of figure 2 has been modified according to the invention in order to solve the above Location Update problem. The Location Update is performed in the mobile telephone under program control, and thus the program can be modified to send a signal to the control circuit 6 just before the Location Update is performed. This signal indicates that a Location Update, and thus a current peak, is about to occur. In figure 3 this signal is provided via the line 22. Based on this signal the control circuit 6 opens the FET 5 so that the current peak can be delivered from the battery 2. When the Location Update is concluded the program can reset the signal again so that the FET is switched off and the battery disconnected again. The modified program is shown in figure 4.

In this way the use of an expensive high current charger is avoided. The battery 2 will of course be discharged slightly, but since the duration of the Location Update is very short, the discharge is much less than the situation in figure 1 where current is supplied to the mobile telephone continuously. If, however, the control circuit 6, which can monitor the battery voltage continuously, also when the battery is disconnected, detects that the battery voltage has decreased below a predetermined threshold because of the current delivered during Location Updates, a new charging cycle may be started to ensure that the battery remains fully charged.

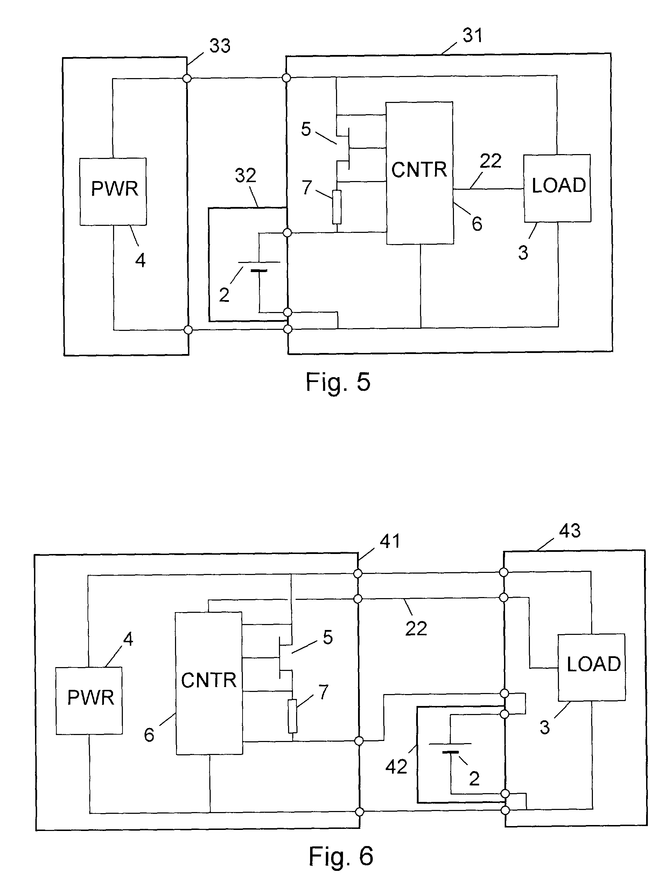

As shown in figure 5, in one embodiment, the control circuit 6 and the FET 5 may be arranged together with the mobile telephone circuit 3 in a common assembly 31. A battery pack 32 with the battery 2 and a charger unit 33 with the charger 4 can then be usual standard components. In this case all modifications according to the invention are implemented in the mobile telephone assembly 31, and thus this is a preferred embodiment.

In an alternative embodiment shown in figure 6 the control circuit 6 and the FET 5 are arranged together with the charger 4 in a charger unit 41. This embodiment has the advantage that these components do not take up space and add weight in the mobile telephone assembly 43. On the other hand an additional connection with the line 22 has to be arranged between the charger unit 41 and the mobile telephone assembly 43, and the program modifications still have to be made in the phone. However, the battery pack 42 can still be a standard component.

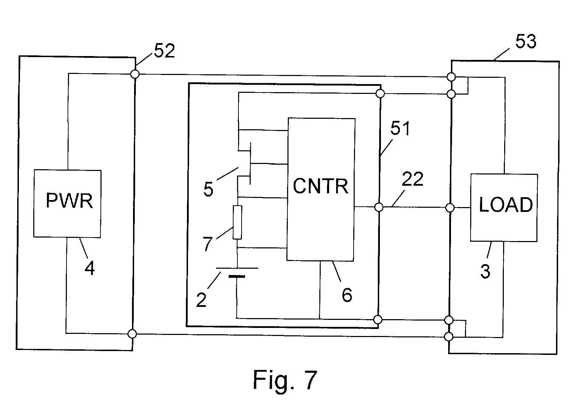

A third embodiment is shown in figure 7. Here the control circuit 6 and the FET 5 are arranged together with the battery 2 in a battery pack 51. Also here an additional connection with the line 22 has to be arranged between the battery pack 51 and the mobile telephone assembly 53, and the program modifications have to be made in the phone. The charger unit 52 can be a standard component.

In addition to the embodiments in figures 5 to 7, further embodiments are possible. As an example, the FET 5 may be arranged together with the battery 2 in a battery pack while the control circuit 6 is arranged together with the mobile telephone circuit.

Although a preferred embodiment of the present invention has been described and shown, the invention is not restricted to it, but may also be embodied in other ways within the scope of the subject-matter defined in the following claims.

## Claims

1. A method of supplying power to an electronic device (3; 31; 43; 53) of a type having a power consumption in which predictable current peaks occur, said device further being connectable to a battery (2),
**characterized in that** the method comprises the steps of:
• supplying power from an external power supply (4; 33; 41; 52) to the device,
• providing a signal (22) from the device (3; 31; 43; 53) indicating that a current peak is about to occur, and
• connecting the battery (2) to the device under control of said signal so that power is supplied from the battery to the device during said current peak.

2. A method according to claim 1, **characterized in that** it further comprises the steps of:
• providing a signal (22) from the device (3; 31; 43; 53) indicating that said current peak is concluded, and
• disconnecting the battery (2) from the device under control of said signal indicating the conclusion of the current peak, so that power is again supplied from the external power supply to the device.

3. A method of charging a battery (2) connected to an electronic device (3; 31; 43; 53) of a type having a power consumption in which predictable current peaks occur, said method comprising the steps of:
• charging the battery (2) from a charger (4; 33; 41; 52),
• simultaneously supplying power from the charger (4; 33; 41; 52) to the device (3; 31; 43; 53),
• measuring the charge level of the battery (2) during the charging process,
• detecting when the charge level of the battery assumes a predetermined charge level, and
• disconnecting the battery (2) from the charger (4; 33; 41; 52) and the device (3; 31; 43; 53) when said predetermined charge level is detected,
**characterized in that** the method further comprises the steps of:
• providing a signal (22) from the device (3; 31; 43; 53) indicating that a current peak is about to occur, and
• connecting the battery (2) to the device under control of said signal so that power is supplied from the battery to the device during said current peak.

4. A method according to claim 3, **characterized in that** it further comprises the steps of:
• providing a signal (22) from the device (3; 31; 43; 53) indicating that said current peak is concluded, and
• disconnecting the battery (2) from the device under control of said signal indicating the conclusion of the current peak, so that power is again supplied from the external power supply to the device.

5. A method according to claim 3 or 4, **characterized in that** it further comprises the steps of :
• measuring the voltage level of the battery (2),
• detecting when the voltage level of the battery has fallen to a predetermined voltage level, and
• recharging the battery (2) from the charger (4; 33; 41; 52) until the charge level of the battery again assumes the predetermined charge level.

6. A method according to any one of claims 3 to 5,
**characterized in that** the electronic device (3; 31; 43; 53) is a mobile telephone, and that said current peak is caused by the telephone performing a location update procedure.

7. A method according to any one of claims 3 to 6,
**characterized in that** the battery (2) is a Lithium ion battery.

8. An electronic device (31) connectable to a battery (2) and an external power supply (33), said device being of a type having a power consumption in which predictable current peaks occur,
**characterized in that**
• the device (31) is arranged to provide a signal (22) indicating that a current peak is about to occur, and
• the device (31) comprises means (5) for connecting the device to the battery (2) under control of said signal so that power can be supplied from the battery to the device during said current peak.

9. An electronic device according to claim 8, **characterized in that**
• the device (31) is further arranged to provide a signal (22) indicating that said current peak is concluded, and
• said means (5) for connecting the device to the battery (2) are further arranged to disconnect the battery from the device under control of said signal indicating the conclusion of the current peak, so that after the current peak power can be supplied from the external power supply to the device.

10. An electronic device according to claim 8 or 9,
**characterized in that** it comprises control means (6) arranged to
• measure the voltage level of the battery (2),
• detect when the voltage level of the battery has fallen to a predetermined voltage level, and
• charge the battery from the external power supply (33) until the charge level of the battery assumes a predetermined charge level.

11. An electronic device according to any one of claims 8 to 10, **characterized in that** said means (5) for connecting the device to the battery comprise a Field Effect Transistor.

12. An electronic device according to any one of claims 8 to 11, **characterized in that** the electronic device (31) is a mobile telephone.

13. An electronic device according to claim 12,
**characterized in that** the mobile telephone is arranged to perform a location update procedure.

14. An apparatus (41) for charging a battery (2) connected to an electronic device (43) of a type having a power consumption in which predictable current peaks occur,
**characterized in that**
• the apparatus (41) is arranged to receive a signal (22) from the electronic device (43) indicating that a current peak is about to occur, and
• the apparatus (41) comprises means (5) for connecting the device (43) to the battery (2) under control of said signal so that power can be supplied from the battery to the device during said current peak.

15. An apparatus according to claim 14, **characterized in that**
• the apparatus (41) is further arranged to receive a signal (22) from the electronic device (43) indicating that said current peak is concluded, and
• said means (5) for connecting the device (43) to the battery (2) are further arranged to disconnect the battery from the device under control of said signal indicating the conclusion of the current peak, so that after the current peak power can be supplied from the apparatus to the device.

16. An apparatus according to claim 14 or 15, **characterized in that** it comprises control means (6) arranged to
• measure the voltage level of the battery (2),
• detect when the voltage level of the battery has fallen to a predetermined voltage level, and
• charge the battery until the charge level of the battery assumes a predetermined charge level.

17. An apparatus according to any one of claims 14 to 16,
**characterized in that** said means (5) for connecting the device to the battery comprise a Field Effect Transistor.

18. A battery pack (51) comprising a battery (2) connectable to an external power supply (52) and to an electronic device (53) of a type having a power consumption in which predictable current peaks occur,
**characterized in that**
• the battery pack (51) is arranged to receive a signal (22) from the electronic device (53) indicating that a current peak is about to occur, and
• the battery pack (51) comprises means (5) for connecting the device (53) to the battery (2) under control of said signal so that power can be supplied from the battery to the device during said current peak.

19. A battery pack according to claim 18, **characterized in that**
• the battery pack (51) is further arranged to receive a signal (22) from the electronic device (53) indicating that said current peak is concluded, and
• said means (5) for connecting the device (53) to the battery (2) are further arranged to disconnect the battery from the device under control of said signal indicating the conclusion of the current peak, so that after the current peak power can be supplied from the external power supply to the device.

20. A battery pack according to claim 18 or 19,
**characterized in that** it comprises control means (6) arranged to
• measure the voltage level of the battery (2),
• detect when the voltage level of the battery has fallen to a predetermined voltage level, and
• charge the battery from the external power supply (52) until the charge level of the battery assumes a predetermined charge level.

21. A battery pack according to any one of claims 18 to 20, **characterized in that** said means (5) for connecting the device to the battery comprise a Field Effect Transistor.

22. A battery pack according to any one of claims 18 to 21, **characterized in that** the battery (2) is a Lithium ion battery.
